# DEMANDE DE BREVET EUROPEEN

(11) **EP 0 569 274 A1**
(43) Date de publication de la demande: **10.11.1993**
(21) Numéro de dépôt: 93401130.5
(22) Date de dépôt: 30.04.1993
(51) Int. Cl.: H04N 7/13

(54) **Dispositif d'insertion de programmes de télévision numérique sur un canal de transmission ou de diffusion et dispositif de réception de tels programmes**

(30) Priorité: 04.05.1992 FR 9205450
(71) Demandeur: MATRA COMMUNICATION, F-29101 Quimper (FR)
(72) Inventeur: Declerck, Christophe, F-28210 Nogent Le Roi (FR)
(74) Mandataire: Fort, Jacques

(57) **Abrégé**

Le dispositif comprend un multiplexeur (10) de premier niveau ayant un sérialiseur (44) d'entrelacement régulier des bits reçus de plusieurs entrées et de fourniture d'un train de sortie binaire à cadence de bits déterminée, destiné à être appliqué à un modulateur d'émission ; et plusieurs multiplexeurs (12a, 12b, 12c, 12d) de second niveau fournissant chacun un flot de bits correspondant à au moins un programme, à une des entrées du multiplexeur de premier niveau, chaque multiplexeur de second niveau étant constitué par un montage en cascade de codeurs de paquets (30,32,34), destinés à recevoir respectivement des paquets vidéo, des paquets son et éventuellement des paquets de messages d'accès conditionnel ou de télétexte et d'un circuit à base de temps (42) d'appel de paquets à partir des codeurs de paquets, le codeur de paquets (30) affecté à la vidéo étant précédé d'un codeur de protection additionnelle contre les erreurs.

## Description

L'invention concerne l'insertion de programmes de télévision, représentés chacun par une séquence de paquets numériques, dans un canal de transmission de diffusion et la récupération de ces programmes. Elle a plus particulièrement pour objet un dispositif du type permettant de constituer un signal "plein temps" de transmission de plusieurs programmes de télévision numérique sous forme d'un multiplex dont chaque composante est constituée de paquets d'éléments binaires ou bits et un dispositif de réception effectuant les opérations duales des opérations d'émission en vue de récupérer ou bien un seul programme, dans le cas d'un récepteur individuel, ou bien tous les programmes en vue de les distribuer, dans le cas d'un récepteur dit collectif ou communautaire.

L'invention trouve une application importante, bien que non exclusive, dans la diffusion de plusieurs programmes de télévision numérique sur un canal satellite dont la largeur est prévue pour autoriser la transmission d'un signal de télévision appartenant à la famille X-MAC/PAQUET. Dans un tel signal, le flot de bits destiné à la transmission ou à la diffusion du son et des données est réparti en paquets de longueur fixe, ayant chacun une adresse de 23 bits, permettant d'identifier l'origine du paquet, et une partie utile de 728 bits, c'est-à-dire de 91 octets. Un organe effectue des demandes de paquets au fur et à mesure de ses disponibilités.

On connaît (The Radio and Electronic engineer, Vol 49, n° 12, December 1979, article de N.H.C Gilchrist "Digital transmission of video and audio signals over an optical-fiber system") un dispostif de codage permettant de constituer un multiplex numérique à partir de deux programmes en PAL comportant deux voies alimentant un ensemble sérialiseur-entrelaceur à un multiplexeur à deux entrées recevant l'une et l'autre des images TV numérisées.

La demande de brevet FR n° 92 00408 décrit un dispositif permettant de constituer un multiplex dit "plein temps" ne comportant pas de partie analogique, mais uniquement des séquences de paquets d'éléments binaires provenant chacun d'une source. Mais chacun des programmes a une structure homogène, c'est-à-dire que tous les éléments binaires représentent la même nature d'informations (son ou données).

La présente invention vise notamment à fournir un dispositif du type ci-dessus défini permettant d'utiliser l'ensemble de la ressource disponible sur un canal en équilibrant les dégradations subies par le son et la vidéo.

Dans ce but l'invention propose un dispositif d'insertion de plusieurs programmes de télévision numérique sur un même canal de transmission ou de diffusion, conforme à la revendication 1.

Le codeur de protection contre les erreurs peut notamment être un codeur de Reed-Solomon. Dans le cas d'un dispositif d'insertion permettant d'utiliser des composants déjà prévus pour la transmission "plein temps" suivant une des normes X-MAC/PAQUETS, le codeur de Reed-Solomon peut notamment être un codeur (90,84) permettant de constituer, à partir de groupes de 84 octets, un ensemble de 90 octets permettant de constituer un paquet D2 plein temps ayant un octet indiquant le type de paquet.

Le multiplexeur de premier niveau comporte avantageusement de son côté des codeurs convolutifs d'entrée destinée à accroître la protection de chaque signal, de type 7/8 par exemple.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est un schéma synoptique de principe d'un dispositif d'insertion selon le mode particulier de réalisation de l'invention ; et
- la figure 2 est un schéma synoptique de principe d'un dispositif de sélection de programme à partir d'un signal fourni par un dispositif du genre montré en figure 1.

Les caractéristiques qui seront données par la suite correspondront essentiellement au cas de dispositifs destinés à la transmission de plusieurs programmes de télévision numérique sur un canal satellite de bande passante large, destiné à la diffusion suivant la norme D2-MAC/PAQUET et autorisant un débit binaire de modulation de 46,28 Mb/s.

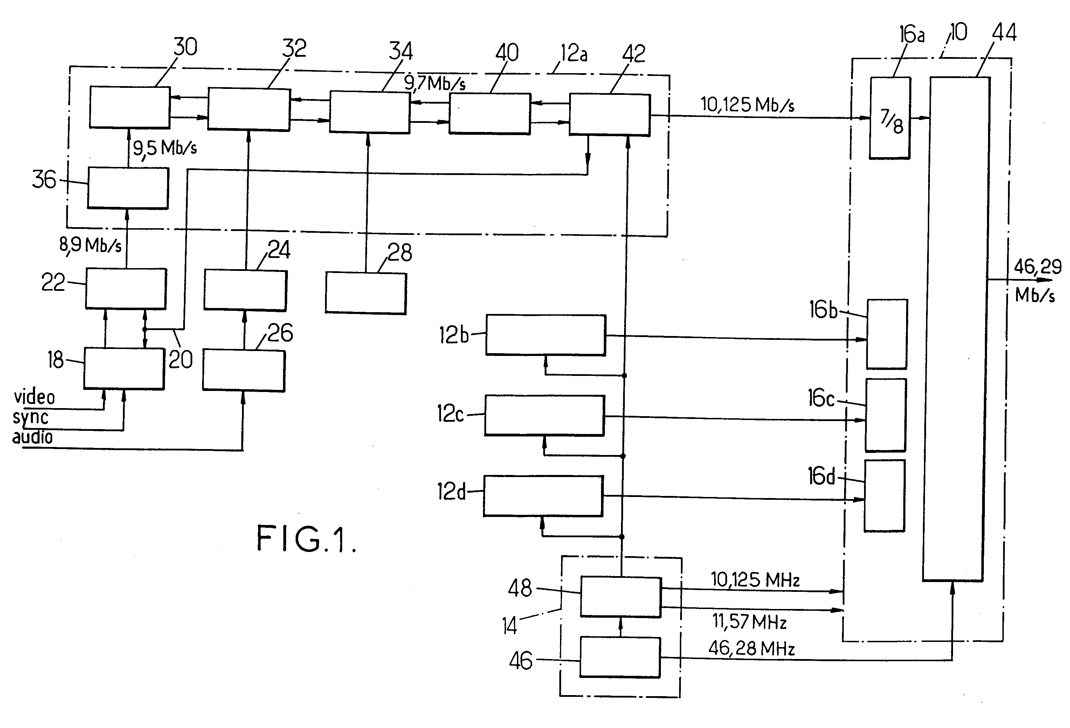

Le dispositif d'insertion de programmes de télévision montré schématiquement en figure 1 peut être regardé comme comprenant :
- un multiplexeur 10 de premier niveau, destiné à former un signal de sortie unique constitué par un flot de bits à 46,28 Mb/s, à partir de signaux provenant de plusieurs sources (au nombre de quatre lorsque l'on veut transmettre 4 programmes de télévision numérique de définition standard sur un canal satellite),
- des multiplexeurs 12a, 12b, 12c, ... de second niveau, affectés chacun à une source de programme et destinés à constituer des multiplex appliqués au multiplexeur 10 de premier niveau, à partir d'informations numériques binaires représentatives de la vidéo, du son et éventuellement de données complémentaires (par exemple d'accès conditionnel), et
- un générateur 14 des différents signaux d'horloge requis pour le fonctionnement des multiplexeurs.

Le multiplexeur 10 de premier niveau peut également recevoir des données binaires représentant des messages, par exemple de télétexte.

Le multiplexeur 12a de second niveau sera seul décrit, les autres pouvant avoir une constitution similaire. Ce multiplexeur 12a a pour fonction de constituer un multiplex de sortie formé de paquets son, de paquets vidéo et éventuellement de paquets de données d'accès conditionnel et/ou de télétexte, à partir de signaux d'entrée qui peuvent être obtenus par des moyens actuellement connus. Dans le cas d'un signal X-MAC PAQUETS, il doit également constituer la ligne 625 à partir de données fournies par un générateur non représenté.

Dans la pratique chaque multiplexeur de second niveau peut être prévu pour former un flot de 10,125 Mb/s, qu'un codeur convolutif 16a de protection contre les erreurs porte à 11,57 Mb/s. On peut ainsi transmettre, sur un même canal satellite, quatre programmes qu'il est possible de distinguer à la réception.

Dans le mode de réalisation montré en figure 1, le signal vidéo numérique, de type 4.2.2. par exemple, appliqué au multiplexeur 12a de niveau 2 est resynchronisé à partir d'un signal d'horloge qui sera mentionné plus loin. Le signal video obtenu, cadencé par le signal de synchronisation de bits et le signal de synchronisation de trame amené par une ligne 20, est appliqué à un codeur de compression 22. Ce codeur, qui permet de réduire le débit binaire dans un rapport élevé et variable suivant le contenu spatiotemporel de la scène représentée par le signal, peut notamment être un codeur de type déjà connu conforme à la norme MPEG (moving picture expert group) de l'ISO. Dans la pratique, le taux de compression réalisé est généralement compris entre 20 et 40. Un tampon ayant une capacité de quelques trames est placé en aval du codeur MPEG 22. Cette mémoire tampon permet d'absorber les variations de débit instantanées de sortie du codeur MPEG et, en conséquence, du fait du remplissage variable de la mémoire tampon, on arrive finalement à un lissage du débit.

L'information audio, sous forme numérique, est appliquée de son côté à un codeur son 24, par l'intermédiaire d'un circuit de retard 26 destiné à maintenir la concordance de temps entre la vidéo et le son, en dépit du retard apporté par le codeur 22. La présence du tampon en sortie du codeur MPEG fait que le retard subi par le signal vidéo depuis son entrée jusqu'à la sortie de la mémoire tampon reste sensiblement constant.

Enfin la voie d'accès conditionnel, qui ne sera prévue que dans que dans certains cas, comprend un générateur 28 fournissant notamment des messages de contrôle des titres d'accès (ou ECM) et des messages de gestion des titres d'accès (ou EMM).

Il est possible d'ajouter encore une autre voie, ou plusieurs, consacrées par exemple au télétexte.

Il est également possible de dédoubler chacune des entrées à un ou plusieurs des multiplexeurs de façon à faire passer deux programmes, occupant chacun, pour l'image, une bande passante ne dépassant pas 4,45 Mbits/s, de façon plus générale, et comme on le verra plus loin, la quasi-totalité des caractéristiques du dispositif est paramétrable.

Le multiplexeur de second niveau 12a qui est représenté comporte un montage en cascade de trois codeurs de paquets 30, 32 et 34, respectivement affectés aux voies vidéo, son et données. Ces codeurs ont tous la même constitution et sont prévus pour recevoir des paquets de 90 octets et pour les formater conformément à la norme D2-MAC avec un débit de 9,5 Mb/s. Le codeur de paquets 30 est pour cela précédé d'un codeur de renforcement de la protection de l'image contre les erreurs. Ce codeur de renforcement peut notamment être un codeur de Reed-Solomon 36 fournissant des groupes de 90 octets à partir de 84 octets par ajout de 6 octets de protection. Pour un débit de sortie de 9,5 Mb/s, le débit brut d'entrée du codeur 36 est alors de 8,9 Mb/s. Le codeur de paquets 30 ajoute l'octet de type de paquet et l'en-tête, protégé par un code de Golay de robustesse comparable à celle donnée par le codeur 36. Le codeur 30 peut avoir la constitution d'un codeur D2 plein temps classique.

La cascade de codeurs de paquets est suivie d'un circuit d'entrelacement (et éventuellement d'embrouillage) de paquets 40 et d'un circuit d'appel de paquets 42 à base de temps. Le circuit 40 est classique. Le circuit 42 est prévu pour appeler des paquets au fur et à mesure des besoins du multiplexeur de premier niveau 10, pour les répartir en salves correspondant chacune à une ligne, pour insérer les signaux de retour trame et éventuellement de retour ligne nécessaires et pour ajouter, dans la ligne 625, les identifications de canal CHID requises. De plus, il ajoute périodiquement un motif de synchronisation de trame à l'information vidéo, dans un circuit 18. Ce motif peut notamment être celui prévu par la norme D2-MAC/PAQUETS

Dans un tel montage, chaque codeur de paquets est esclave de celui qui le précède et maître de celui qui le suit. Chaque requête de paquet est transmise dans la cascade jusqu'à ce qu'elle rencontre un codeur ayant des paquets à émettre, ou peut être remplie par le codeur auquel est affecté une priorité maximale, comme cela est décrit dans lé demande de brevet FR n° 91 07443.

La protection contre les erreurs est complétée par le codeur convolutif 16, par exemple de type 7/8, qui fait passer le débit du canal de 10,125 Mb/s à 11,57 Mb/s.

Enfin le sérialiseur 44 du multiplexeur de premier niveau 10 entrelace régulièrement les bits provenant des différents multiplexeurs de second niveau.

Les signaux d'horloge à différentes fréquences nécessaires au fonctionnement des codeurs et du multiplexeur 10 peuvent être fournis par la base de temps 14 ayant une horloge mère unique 46 et des diviseurs 48.

Le codeur peut être complété par des générateurs de paquets de bourrage, insérés en cas de nécessité à la place de paquets vidéo, son ou données. Un générateur de paquets de bourrage est associé à chacun des circuits d'appel de paquets 42, pour fournir un paquet de substitution en cas d'absence de paquet disponible.

Il faut relever que tous les composants sont paramétrables, de sorte que le codeur peut aisément être adapté à un canal de débit différent de 46,28 Mb/s, par exemple par addition ou suppression de multiplexeurs de second niveau et/ou modification des fréquences d'horloge. Cela permet également d'associer, en amont d'un même multiplexeur de premier niveau, des multiplexeurs constituant des trames en D2 plein temps et des multiplexeurs constituant des trames en D plein temps. Les composants peuvent être comparables à ceux d'un codeur plein temps tels que ceux décrits dans la demande de brevet FR n° 92 00408 pour "Codeur multi-composantes X-PAQUETS et décodeur correspondant". Toute demande de paquet provenant du circuit 42 remonte vers le circuit d'entrelacement 40 qui contient un jeu de mémoires vives d'entrée ; une mémoire se vide vers le circuit 42 tandis qu'une autre acquiert le paquet amont le plus prioritaire.

Le signal transmis, de constitution générale similaire à celle d'un signal de son ou de données plein temps, peut être traité à la réception pour récupérer soit un seul programme, soit plusieurs programmes pour distribution de ces derniers.

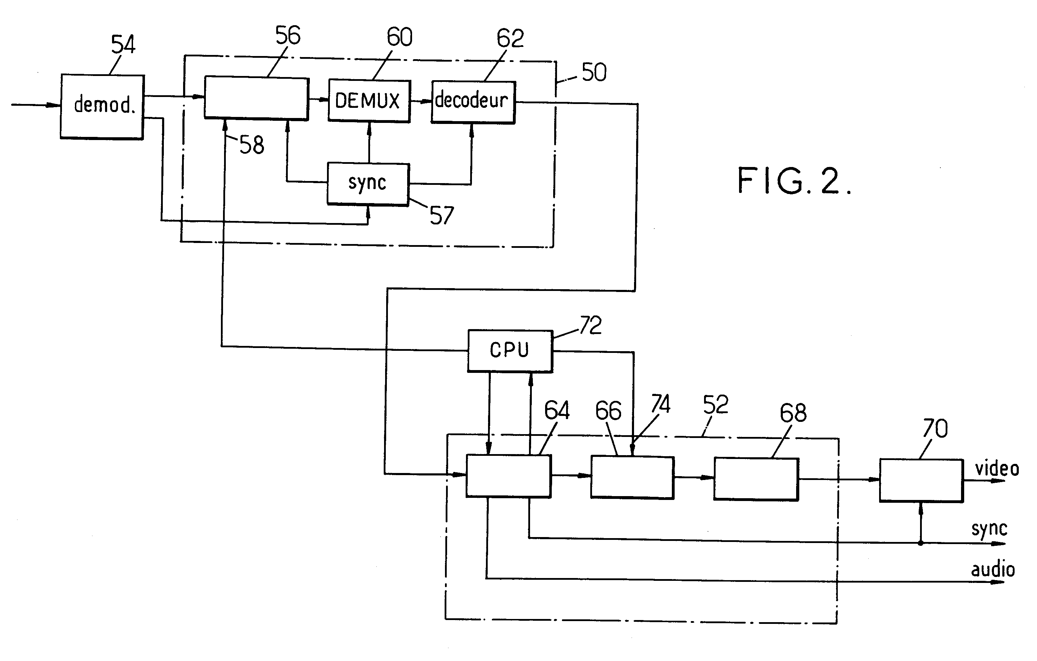

La figure 2 montre un décodeur destiné à récupérer un seul programme parmi n=4 programmes. Il peut être regardé comme comprenant un démultiplexeur de premier niveau 50 qui reçoit le signal démodulé en bande de base et un démodulateur de second niveau 52. La démodulation sera généralement effectuée par un démodulateur synchrone 54 muni de moyens de récupération de l'horloge de synchronisation de bit, bien qu'on puisse utiliser un démodulateur non cohérent. Le démultiplexeur 50 comprend un circuit d'entrée 56 qui introduit un retard de un à quatre (ou plus généralement n) temps bit, suivant l'ordre de sélection de canal appliqué sur son entrée 58. En fait, un tel retard n'est suffisant que dans le cas d'une démodulation effectuée par un décodeur à seuil. Un démultiplexeur de bit 60 retient un bit sur quatre et applique le flot obtenu à un décodeur à maximum de vraisemblance 62 tel qu'un décodeur de Viterbi. Dans le cas d'un tel décodeur, ayant un motif de longueur déterminée, le circuit d'entrée 56 doit être capable, sous la commande du circuit de synchronisation 57, d'introduire un retard suffisant pour que le décodeur puisse se caler sur le début du motif du code convolutif utilisé.

Le circuit d'entrée du multiplexeur de second niveau est un démultiplexeur de voie 64 qui sépare les paquets vidéo et son et qui extrait la synchronisation en utilisant les en-têtes d'identification et la ligne 625. Il oriente les paquets vidéo vers une chaîne de traitement ayant, éventuellement après un circuit de désembrouillage 66, un décodeur Reed-Solomon 68 et un décodeur MPEG 70 effectuant les opérations duales des circuits 36 et 22.

Une unité centrale de calcul 72, telle qu'un micro-contrôleur, sera généralement prévue pour reconstituer le mot de contrôle et l'appliquer sur une entrée 74 du désembrouilleur et fournir les informations nécessaires au démultiplexeur de voie 64.

La constitution d'un dispositif de réception communautaire découlant directement de celle qui précède par duplication de certains composants, il est inutile de la décrire ici. Un tel dispositif de réception permet d'alimenter plusieurs récepteurs soit en bande de base soit plus fréquemment après remodulation de fréquences intermédiaires différentes pour une distribution par câble.

## Revendications

1. Dispositif d'insertion de plusieurs programmes de télévision, chaque programme étant représenté par des données binaires de vidéo obtenues par compression de signal d'image, par des données binaires de son et éventuellement par des données binaires d'accès conditionnel comprenant ;
un multiplexeur (10) de premier niveau ayant un sérialiseur (44) d'entrelacement régulier des bits reçus de plusieurs entrées et de fourniture d'un train de sortie binaire à cadence de bits déterminée, destiné à être appliqué à un modulateur d'émission ;
et plusieurs multiplexeurs (12a,12b,12c,12d) de second niveau fournissant chacun un flot de bits correspondant à au moins un programme, à une des entrées du multiplexeur de premier niveau, chaque multiplexeur de second niveau étant constitué par un montage en cascade de codeurs de paquets (30,32,34), destinés à recevoir respectivement des paquets vidéo, des paquets son et éventuellement des paquets de messages d'accès conditionnel ou de télétexte, et d'un circuit à base de temps (42) d'appel de paquets à partir des codeurs de paquets, le codeur de paquets (30) affecté à la vidéo étant précédé d'un codeur de protection additionnelle contre les erreurs.

2. Dispositif selon la revendication 1 ou 2, caractérisé en ce que le codeur de protection additionnelle est un codeur de Reed-Solomon (36).

3. Dispositif selon la revendication 1 ou 2, caractérisé en ce que le codeur de protection additionnelle (36) est sélectionné pour équilibrer la dégradation de l'image et celle du son.

4. Dispositif selon la revendication 1, 2 ou 3, caractérisé en ce que le multiplexeur de premier niveau comprend un codeur convolutif (16a,16b,16c,16d) placé sur chaque entrée du sérialiseur (44) et recevant le signal de sortie d'un des multiplexeurs de second niveau (12a,12b,12c,12d).

5. Dispositif selon la revendication 1, caractérisé en ce que la cascade des codeurs de paquets (30,32,34) est suivie d'un circuit d'entrelacement et éventuellement d'embrouillage (40).

6. Dispositif selon l'une quelconque des revendications 1 à 5, caractérisé en ce que les multiplexeurs de second niveau sont constitués de façon que tout appel de paquet provenant du circuit (42) d'appel de paquets transite dans la cascade jusqu'à rencontrer un codeur ayant des paquets à émettre ou le codeur de priorité maximale.

7. Dispositif selon l'une quelconque des revendications précédentes, caractérisé en ce que le codeur de protection additionnelle (36) est précédé d'un codeur de compression et d'un circuit de resynchronisation (18).

8. Dispositif selon la revendication 7, caractérisé en ce que le codeur de paquets son (22) reçoit les paquets son par une voie comprenant un codeur (24) et un circuit de retard,de maintien de la concordance de temps entre vidéo et son.

9. Dispositif de réception de programmes de télévision numérique insérés par un dispositif suivant l'une quelconque des revendications précédentes, caractérisé en ce qu'il comprend, pour un programme, un circuit (56) de retard réglable par pas égaux à un temps bit, un démultiplexeur de sélection d'un bit sur n (n étant le nombre de programmes multiplexés) et un décodeur (62) à maximum de vraisemblance et en ce qu'il comprend en outre un circuit (64) de séparation des voies vidéo et son et d'extraction de synchronisation et des décodeurs ayant la fonction duale de celle des codeurs de la voie vidéo.
